# EUROPEAN PATENT APPLICATION

(11) **EP 0 758 003 A2**
(43) Date of publication of application: **12.02.1997**
(21) Application number: 96305691.6
(22) Date of filing: 01.08.1996
(51) Int. Cl.: C08L 69/00, C08K 13/02

(54) **Reinforced polycarbonate compositions with improved surface appearance**

(30) Priority: 07.08.1995 JP 219468/95
(71) Applicant: GENERAL ELECTRIC COMPANY, Schenectady, NY 12345 (US)
(72) Inventor: Saito, Akihiro, Utsunomiya City, Tochigi Prefecture (JP)
(74) Representative: Szary, Anne Catherine

(57) **Abstract**

A polycarbonate (PC) resin composition which has an improved surface appearance and a high modulus comprises (A) 99-40 parts by weight of a PC composition and (B) 1-60 parts by weight of an inorganic filler, as well as (C) 1-30 parts by weight of a phosphoric acid ester compound with respect to a total of 100 parts by weight of components (A) and (B).

## Description

The present invention relates to a polycarbonate resin composition reinforced with an inorganic filler.

As glass-reinforced polycarbonate resin is outstanding in properties such as mechanical strength, hardness, and dimensional stability, it is widely used as a material for housings of cameras, power tools, etc. In such applications, the surface must have an outstanding external appearance in order to increase the value of the product.

However, compared to other resins such as glass-reinforced nylon and glass-reinforced polyester, in glass-reinforced polycarbonate resins, the glass fibers come to the surface, causing the phenomenon known as glass "floating," and this makes it difficult to obtain an outstanding surface appearance.

In order to solve this problem, the method of carrying out molding with a high metal mold temperature has conventionally been used, but this method is undesirable because it prolongs the molding cycle.

Moreover, the method is also used of applying a finishing coat in order to obtain an outstanding external appearance, but the costs of such coating are high, making this method uneconomical, and even when surfaces showing extensive glass floating are coated, it is difficult to obtain a desirable external appearance.

On the other hand, when polycarbonate resins are reinforced with inorganic fibers other than glass, such as talc, clay, and mica, deterioration of the polycarbonate resin occurs, and this causes the striped pattern referred to as silver streaks to appear on the surface of the molded product, thus decreasing its value.

The purpose of the present invention is therefore to provide a polycarbonate resin composition reinforced with an inorganic filler which has an improved surface appearance and a high modulus of elasticity.

The present invention provides a resin composition containing
(A) 99-40 parts by weight of a polycarbonate resin and
(B) 1-60 parts by weight of an inorganic filler,
as well as (C) 1-30 parts by weight of a phosphoric acid ester compound with respect to a total of 100 parts by weight of (A) and (B).

Particularly when a specified combination is used as the inorganic filler, in combined use with a phosphoric acid ester compound, the effect of the present invention of improving the external appearance of the surface is pronounced, and the modulus of flexural elasticity is also high. This inorganic filler is composed of a combination of:
(B-1) a fiber filler selected from among glass fibers and carbon fibers, and
(B-2) at least one filler from among (1) a short-fiber filler having an
average fiber length of 5-120 mm and an average fiber diameter of 5-30 mm, (2) a granular filler having an average particle diameter of 0.5-50 mm, and (3) a plate-type filler having an average particle diameter of 0.5-20 mm.

The polycarbonate used in the present invention is an aromatic homopolycarbonate or copolycarbonate obtained by reacting an aromatic dihydroxy compound and a carbonate precursor. Moreover, this polycarbonate may also be branched. This type of branched polycarbonate may be obtained by reacting a multifunctional aromatic compound with an aromatic dihydroxy compound and a carbonate precursor. Examples of multifunctional aromatic compounds used in manufacturing a branched polycarbonate are presented in the specifications of U.S. Patent Applications Nos. 3,028,385, 3,334,154, 4,001,124, and 4,131,576.

Polycarbonate resin is generally characterized by having the repeated structural units shown in the following formula:

(-O-A-O-C(=O)-)

(In the above formula, A is a divalent residue of an aromatic dihydroxy compound).
The aromatic dihydroxy compound used contains 2 hydroxyl groups as functional groups, and these are mononuclear or polynuclear aromatic compounds which are directly bound to carbon atoms in aromatic nudei. There are no particular restrictions on these aromatic dihydroxy compounds, and various commonly-known compounds may be used. Examples include compounds having the following formula: 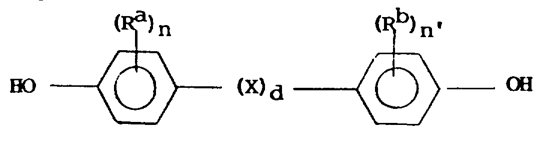 (In the above formula, R^{a} and R^{b} are individual halogen atoms or monovalent hydrocarbon groups, X is - (R^{c-}) C (-R^{d}) -, - C (=R^{e}) -, - O -, - S -, - SO -, or - SO₂ -, R^{c} and R^{d} are individual hydrogen atoms or monovalent hydrocarbon groups, R^{e} is a divalent hydrocarbon group, n and n' are individual integers from 0-4, and d is 0 or 1). Specifically, these compounds indude bis(hydroxyaryl)alkanes such as bis(4-hydroxyphenyl)methane, 1,1-bis(4-hydroxyphenyl)ethane, 2,2-bis(4-hydroxyphenyl)propane(referred to as bisphenol A), 2,2-bis(4-hydroxyphenyl)butane, 2,2-bis(4-hydroxyphenyl)octane, bis(4-hydroxyphenyl)phenylmethane, 2,2-bis(4-hydroxy-3-methylphenyl)propane, 2,2-bis(4-hydroxy-3,5-dimethylphenyl)propane, 1,1-bis(4-hydroxy-t-butylphenyl)propane, 2,2-bis(4-hydroxy-3-bromophenyl)propane, and 2,2-bis(4-hydroxy-3,5-dibromophenyl)propane, bis(hydroxyaryl)cycloalkanes such as 1,1-bis(4-hydroxyphenyl)cyclopentane and 1,1-bis(4-hydroxyphenyl)cyclohexane, dihydroxydiaryl ethers such as 4,4'-dihydroxydiphenyl ether and 4,4'-dihydroxy-3,3'-dimethylphenyl ether, dihydroxydiaryl sulfides such as 4,4'-dihydroxydiphenyl sulfide and 4,4'-dihydroxy-3,3'-dimethylphenyl sulfide, dihydroxydiaryl sulfoxides such as 4,4'-dihydroxydiphenyl sulfoxide and 4,4'-dihydroxy-3,3'-dimethyldiphenyl sulfoxide, dihydroxydiaryl sulfones such as 4,4'-dihydroxydiphenyl sulfone and 4,4'-dihydroxy-3,3'-dimethylphenyl sulfone, and 4,4'-bisphenol, but this list is not exhaustive. Among these substances, 2,2-bis(4-hydroxyphenyl)propane is particularly preferred. In addition to the above substances, compounds having the following general formula: 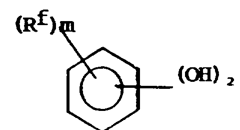 (where Rf indicates independent hydrocarbon groups having 1-10 carbon atoms or halogen compounds or halogen atoms, and m is an integer from 0-4) may be used as the aromatic dihydroxy compound, with examples including resorcinol and substituted resorcinols such as 3-methylresorcinol, 3-ethylresorcinol, 3-propylresorcinol, 3-butylresorcinol, 3-t-butylresorcinol, 3-phenylresorcinol, 3-cumylresorcinol, 2,3,4,6-tetrafluororesorcinol, or 2,3,4,6-tetrabromoresorcinol; catechol, hydroquinone, or a substituted hydroquinone such as 3-methylhydroquinone, 3-ethylhydroquinone, 3-propylhydroquinone, 3-butylhydroquinone, 3-t-butylhydroquinone, 3-phenylhydroquinone, 3-cumylhydroquinone, 2,3,5,6-tetramethylhydroquinone, 2,3,5,6-tetra-t-butylhydroquinone, 2,3,5,6-tetrafluorohydroquinone, or 2,3,5,6-tetrabromohydroquinone, and substances such as the 2,2,2',2'-tetrahydro-3,3,3',3'-tetramethyl-1,1'-spirobis[1H-indene]-7,7'-diol shown in the following formula:

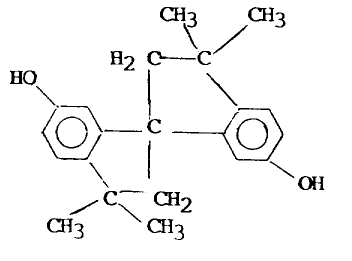

These aromatic dihydroxy compounds may be used either individually or in combinations of 2 or more.

In manufacturing the polycarbonate, any commonly-known manufacturing method may be used, with examples including (1) the method of synthesizing polycarbonate by causing transesterification of an aromatic dihydroxy compound and a carbonate precursor (such as a carbonic acid diester) in a molten state and (2) methods involving the reaction of an aromatic dihydroxy compound and a carbonate precursor (such as phosgene) in a molten state (particularly the surface method). For example, such manufacturing methods are presented in Japanese Unexamined Patent Applications Nos. 90-175723 and 90-124934 and US. Patent Applications Nos. 4,001,184, 4,238,569, 4,238,597, and 4,474,999. In method (1), the carbonic acid diester, catalyst, etc., used should preferably be those specified in aforementioned Japanese Unexamined Patent Applications Nos. 90-175723 and 90-124934. Examples of such carbonic acid diesters indude diphenyl carbonate, ditolyl carbonate, bis(chlorophenyl) carbonate, m-cresyl carbonate, dinaphthyl carbonate, and dicydohexyl carbonate, and preferred catalysts indude the compounds presented in Japanese Unexamined Patent Application No. 92-175368, filed by the present applicant.

A halogenated carbonyl, diaryl carbonate, or bishaloformate may be mentioned as examples of the carbonate precursor used in method (2), and any of these substances may be used. Examples of halogenated carbonyls include carbonyl bromide, carbonyl chloride (referred to as phosgene), and mixtures thereof. Examples of aryl carbonates include diphenyl carbonate, ditolyl carbonate, bis(chlorophenyl)carbonate, m-cresyl carbonate, dinaphthyl carbonate, and bis(diphenyl) carbonate. Moreover, examples of bishaloformates include bischloroformates or bisbromoformates of 2,2-bis(4-hydroxyphenyl)propane, 2,2-bis(4-hydroxy-3,5-dichlorophenyl)propane, bischloroformates or bisbromoformates of aromatic dihydroxy compounds such as hydroquinone, and bischloroformates or bisbromoformates of glycols such as ethylene glycol. Any of the aforementioned carbonate precursors may be used, but carbonyl chloride (referred to as phosgene) is preferred.

Examples of (B) the inorganic filler used in the present invention include glass fibers, milled glass, glass flakes, glass beads, carbon fibers, milled carbon fibers, talc, clay, and mica. The glass fibers used may be fibers bundled using a binder such as an epoxy or urethane-class binder or fibers with coupling agents added such as aminosilane and epoxysilane. Examples of preferred inorganic fillers include glass fibers and/or carbon fibers, fillers selected from among talc, clay, and mica, and fillers composed of
(B-1) fibrous fillers selected from among glass fibers and carbon fibers, and
(B-2) at least one type of filler selected from among (1) a short-fiber filler having an average fiber length of 5-120 mm, preferably 5-100 mm, and an average fiber diameter of 5-30 mm, preferably, 5-20 mm, (2) a granular filler having an average partide diameter of 0.5 mm or above, preferably 1 mm or above, and 50 mm or below, preferably 20 mm or below, and (3) a plate-type filler having an average partide diameter of 0.5 mm or above, preferably 1 mm or above, and 20 mm or below, preferably 10 mm or below. Examples of short-fiber fillers which meet the criteria under (1) above include milled glass and milled carbon fibers. Examples of granular fillers which meet the criteria under (2) above indude glass beads. Examples of plate-type fillers which meet the criteria under (3) above indude glass flakes, mica (metal mica, white mica, etc.), clay, and talc.

A particularly preferred inorganic filler contains the combination of (B-1) and (B-2) mentioned third above. As mentioned previously, when the above combined inorganic filler is used in polycarbonate resin, one obtains a marked effect of improving surface appearance when used in combination with a phosphoric acid ester compound, and modulus of flexural elasticity is high.

Next, examples of (C) the phosphoric acid ester compound used in the present invention indude phosphoric acid ester compounds having Formula (I) below: 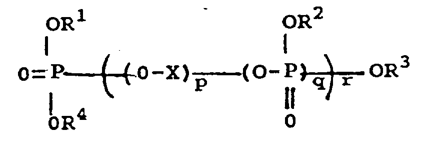 (Here, R¹, R², R³, and R⁴ are independent hydrogen atoms or organic groups, except in the case of R¹ = R² = R³ = R⁴ = H. X is an organic group having a valence of 2 or above, p is 0 or 1, q is an integer 1 or above such as 30 or below, and r is an integer 0 or above.) However, it is not limited to such compounds.

In Formula (I) above, the organic group may be a substituted or unsubstituted alkyl group, a cycloalkyl group, or an aryl group. Moreover, in the case of substitution, examples of the substituent include an alkyl group, alkoxy group, alkylthio group, halogen, aryl group, aryloxy group, arylthio group, or halogenated aryl group, or a group combining these substituents (such as an arylalkoxyaryl group, etc.), or a group combining these substituents through bonding with oxygen atoms, sulfur atoms, nitrogen atoms, etc. (such as an arylsulfonylaryl group, etc.). Furthermore, an organic group having a valence of 2 or above refers to groups having a valence of 2 or above formed by removing 1 or more hydrogen atoms bound to carbon atoms from the aforementioned organic group. Examples include substances derived from an alkylene group, or preferably a (substituted) phenylene group, or a polynuclear phenol such as bisphenol, and relative positions having a free valence of 2 or more may be selected as desired. Particularly preferred examples include bisphenol A, hydroquinone, resorcinol, diphenvlolmethane, diphenyloldimethylmethane, dihydroxydiphenol, p,p'-dihydroxydiphenyl sulfone, and dihydroxynaphthalene.

Examples of specific phosphoric acid ester compounds inciude trimethyl phosphate, triethyl phosphate, tributyl phosphate, trioctyl phosphate, tri(butoxyethyl) phosphate, triphenyl phosphate, tricresyl phosphate, cresyl phenyl phosphate, octyl diphenyl phosphate, diisopropyl phenyl phosphate, tris(chloroethyl) phosphate, tris(dichloropropyl) phosphate, tris(chloropropyl) phosphate, bis(2,3-dibromopropyl) phosphate, and bis(chloropropyl) monooctyl phosphate, bisphenol A bisphosphate, hydroquinone bisphosphate, resorcinol bisphosphate, and trioxybenzene triphosphate in which R¹-R⁴ are alkoxy groups such as methoxy, ethoxy, or propoxy groups, preferably (substituted) phenoxy groups such as phenoxy and methyl (substituted) phenoxy, and preferably triphenyl phosphate and various polyphosphates.

Aforementioned component (C) is added in the amount of 1 part by weight or more with respect to a total of 100 parts by weight of components (A) and (B), and preferably 3 parts by weight or more, and 30 parts by weight or less, and preferably 20 parts by weight or less. If the amount of component (C) added is less than the above range, the effect of the present invention will not be sufficiently displayed, and if it is more than the aforementioned range, thermal resistance will be impaired.

Furthermore, flame retardants may also be added to the resin composition of the present invention. Examples of such flame retardants include bromine-class flame retardants such as tetrabromobisphenol A-bisphenol A copolymer and brominated polycarbonate oligomer and organic sulfonic acid metal salts. Polytetrafluoroethylene may also be added as needed as an anti-dripping agent.

Moreover, provided that the physical properties of the resin composition of the present invention are not impaired, other resins may be added to it during mixing and molding. However, as there is a tendency for the weld portion to become conspicuous, adversely affecting external appearance, it is preferable not to add other resins with are not compatible with polycarbonate resins. Other commonly-used additives, such as dyes, pigments, shock-resistance-improving agents, antioxidants, ultraviolet absorbers, lubricants, mold-releasing agents, plasticizers, fluidity-improving agents, and antistatic agents, may also be added.

There are no particular restrictions on the method used for manufacturing the resin composition of the present invention, and ordinary methods may be satisfactorily used. Generally speaking, however, the melt-mixing method is preferred. Small amounts of solvents may also be used, but they are generally not required. Specific examples of equipment used indude extruders, Banbury mixers, rollers, and kneaders, and these may be used in either batch or continuous operation. There are no particular restrictions on the order of addition of components to the mixture.

As the resin composition of the present invention provides molded products having a favorable surface appearance and which can be used uncoated, it is useful as an uncoated molded product for use in housings of notebook-type personal computers.

### Examples

The following is an explanation of the present invention in greater detail using practical examples. In the practical examples, the following components were used.

### Component (A)

Polycarbonate: Manufactured by Nihon G.E. Plastics K.K., commercial name: Lexan (intrinsic viscosity measured at 25°C in methylene chloride: 0.45 dl/g)

### Component (B)

Glass fibers: Manufactured by Asahi Fiberglass K.K., commercial name: FT121

### Mica

Mica-1: Muscovite M-XF, average particle diameter 4 mm, manufactured by Repco

Mica-2: Muscovite M-400, average particle diameter 13 mm, manufactured by Repco

Mica-3: Muscovite M-200, average particle diameter 55 mm, manufactured by Repco

### Talc

Talc-1: NK 48, average partide diameter 12 mm, manufactured by Fuji Talc

Talc-2: LMS100, average partide diameter 2 mm, manufactured by Fuji Talc

Glass beads: EGB 210A, average particle diameter 17 mm, manufactured by Toshiba Balodini

Milled glass: MF-3A, average fiber length 70 mm, average fiber diameter 10 mm, manufactured by Asahi Fiberglass K.K.

### Component (C)

CR733S (commercial name), phenylresorcinol polyphosphate, manufactured by Oya Kagaku K.K.)

CR741 (commercial name, bisphenol A polyphosphate, manufactured by Oya Kagaku K.K.)

### Examples 1-9 and Comparison Examples 1-4

The various components were mixed at the ratios (weight ratios) shown in Tables 1 and 2 and extruded using a monoaxial extruder (65 mm) set to 270°C, 100 rpm, and 80 kg/hour (extrusion speed) to prepare pellets. Next, using the pellets obtained, extrusion molding was carried out under conditions of set temperature of 260°C and metal mold temperature of 80°C, and a molded product having a wall thickness of 3.2 mm was obtained. The external appearance of the surface of the molded product was evaluated, and its modulus of flexural elasticity was measured. These results are shown in Tables 1 and 2.

Moreover, the external appearance of the surface was evaluated based on surface roughness, and the presence or absence of silver streaks was assessed and visually evaluated. Surface roughness was measured using a surface roughness meter (multipurpose surface shape measurement device equipped with a surface data processing function, Model SE-3H, manufactured by Kozaka Kenkyujo K.K.), and 10-point average roughness (Rz) and central line average roughness (R-a) were determined according to JIS B0601. The average value of three measurements was taken with a measurement distance of 2.5 mm. The smaller the numerical value, the smoother the surface was. Moreover, modulus of flexural elasticity was measured according to ASTM D790.

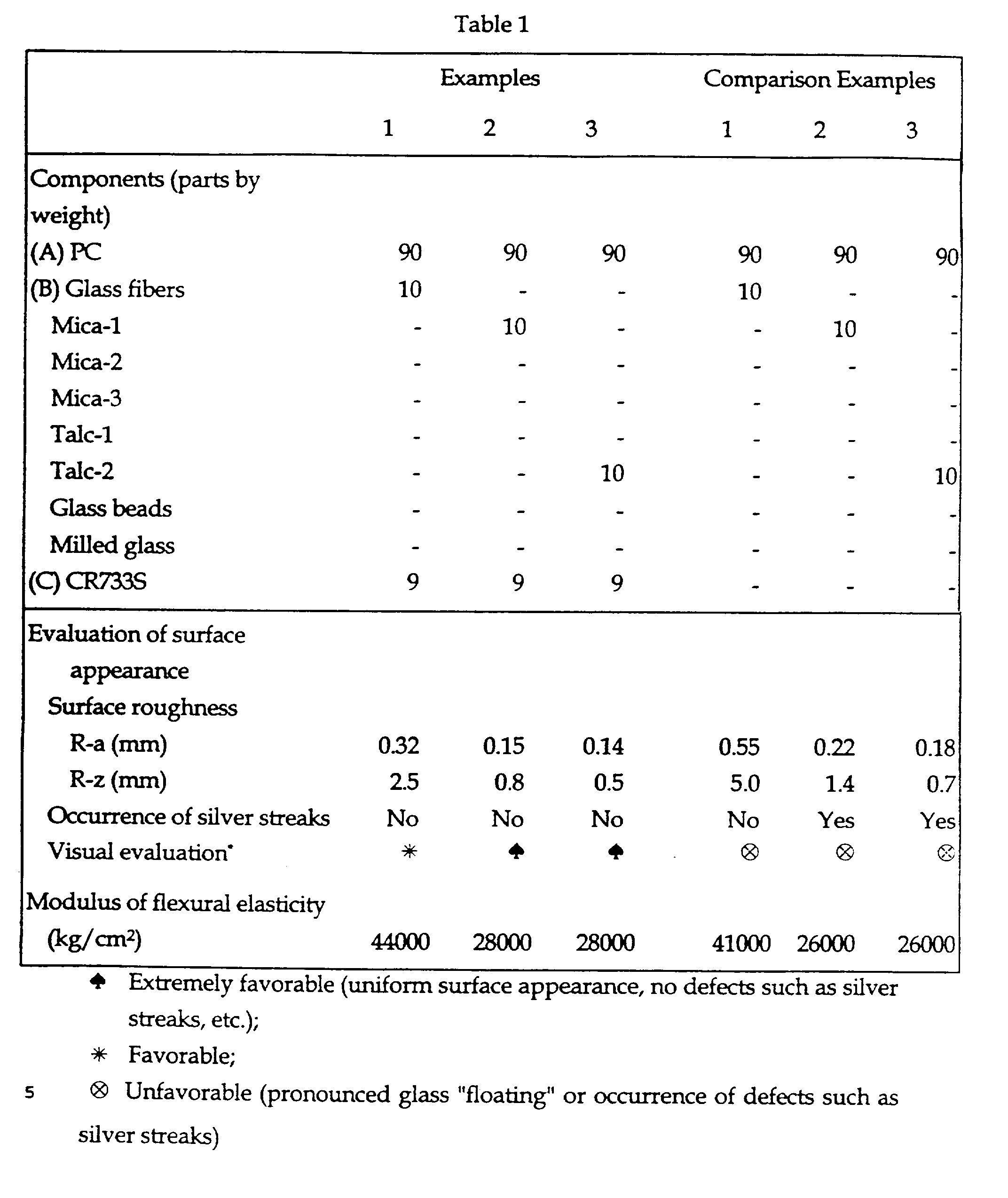

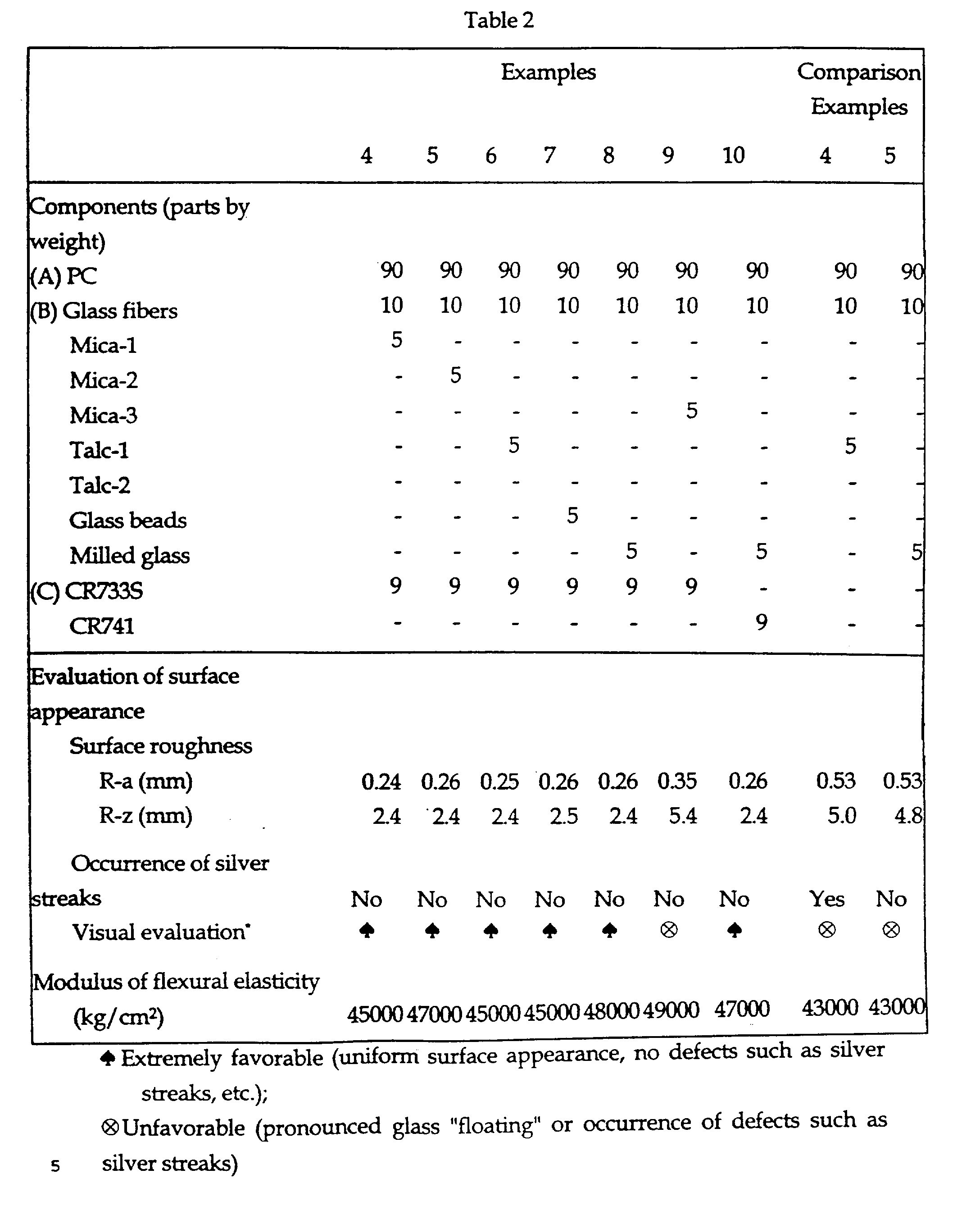

As can be seen from Tables 1 and 2, when the phosphoric acid ester compound was blended in, the numerical value for surface roughness decreased, meaning that the surface appearance improved (glass fibers: Example 1 and Comparison Example 1, mica: Example 2 and Comparison Example 2, talc: Example 3 and Comparison Example 3, combinations: Example 6 and Comparison Example 4, Examples 8 and 10 and Comparison Example 5). Moreover, one can see that when mica and talc were blended with the polycarbonate as inorganic fillers, silver streaks were produced (Comparison Examples 2, 3, and 4), but when the phosphoric acid ester compound was blended in, it was possible to prevent the formation of silver streaks (Examples 2, 3, and 6). Moreover, one can see that when a combination of glass fibers and a specified filler was used, it was possible to obtain a resin composition having an outstanding surface appearance and modulus of flexural elasticity (Examples 4-8 and 10).

The polycarbonate resin composition of the present invention shows an outstanding surface appearance, even though it is reinforced with an inorganic filler. Accordingly, it is most suitable for application in housing materials for cameras, power tools, telephones, personal computers (particularly notebook-type personal computers), video cameras, televisions, copiers, and fax machines. As these molded products have a favorable surface appearance, they do not need to be coated. Furthermore, they can be applied in a broad range of applications requiring both hardness and a favorable surface appearance.

## Claims

1. A resin composition containing (A) 99-40 parts by weight of a polycarbonate resin and (B) 1-60 parts by weight of an inorganic filler, as well as (C) 1-30 parts by weight of a phosphoric acid ester compound with respect to a total of 100 parts by weight of (A) and (B).

2. The resin composition of Claim 1, characterized in that (B) the inorganic filler is glass fibers or carbon fibers.

3. The resin composition of Claim 1, characterized in that (B) the inorganic filler is at least one filler selected from among the group of talc, day, or mica.

4. The resin composition of Claim 1, characterized in that (B) the inorganic filler is composed of a combination of:
(B-1) a fiber filler selected from among glass fibers and carbon fibers, and
(B-2) at least one filler from among (1) a short-fiber filler having an average fiber length of 5-120 mm and an average fiber diameter of 5-30 mm, (2) a granular filler having an average particle diameter of 0.5-50 mm, and (3) a plate-type filler having an average particle diameter of 0.5-20 mm.

5. The resin composition of Claim 1 characterized in that (C) the phosphoric acid ester compound is as shown in Formula (I) below: 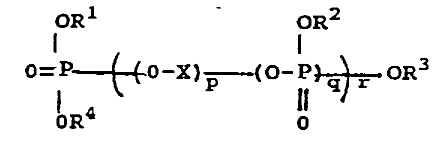 (where R¹, R², R³, and R⁴ indicate independent hydrogen atoms or organic groups, except in the case of R¹ = R² = R³ = R⁴ = H. X is an organic group having a valence of 2 or above, p is 0 or 1, q is an integer 1 or above, and r is an integer 0 or above.).

6. An uncoated molded material for housings of notebook-type personal computers composed of the resin composition of Claim 1.
